(19) Europäisches Patentamt
European Patent Office
Office européen des brevets

(11) **EP 3 614 112 A1**

(12) **EUROPEAN PATENT APPLICATION**
published in accordance with Art. 153(4) EPC

(43) Date of publication:
26.02.2020 Bulletin 2020/09

(51) Int Cl.:
*G01K 11/12* (2006.01)    *G01K 11/06* (2006.01)

(21) Application number: 18814468.7

(22) Date of filing: 07.03.2018

(86) International application number:
PCT/JP2018/008837

(87) International publication number:
WO 2018/225319 (13.12.2018 Gazette 2018/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.06.2017 JP 2017113118

(71) Applicant: Hitachi, Ltd.
Tokyo 100-8280 (JP)

(72) Inventors:
• TOKUDA Yuya
  Tokyo 100-8280 (JP)
• AIDA Kohhei
  Tokyo 100-8280 (JP)
• MORI Shunsuke
  Tokyo 100-8280 (JP)
• KAWASAKI Masahiro
  Tokyo 100-8280 (JP)

(74) Representative: Manitz Finsterwald
Patent- und Rechtsanwaltspartnerschaft mbB
Martin-Greif-Strasse 1
80336 München (DE)

(54) **TEMPERATURE EVALUATION SYSTEM, AND ARTICLE MANAGEMENT SYSTEM IN WHICH SAME IS USED**

(57)    In order for the present invention to provide a temperature evaluation system and an article management system with which it is possible to evaluate the highest temperature reached or the lowest temperature reached from the color optical density of a thermosensitive material, the temperature evaluation system according to the present invention evaluates the temperature of an indicator in which a thermosensitive material is used, wherein the temperature evaluation system is characterized by being provided with: a read-in device that acquires image data pertaining to the indicator; a storage device that stores the relationship between color density and temperature for each thermosensitive material; and a processing device provided with a color density estimation unit that estimates the color density of the thermosensitive material from the image data, a material identification unit that specifies the thermosensitive material used in the indicator, and a temperature estimation unit that selects, from among the relationships between color density and temperature for each thermosensitive material, the relationship between color density and temperature of the thermosensitive material specified by the material identification unit, and that estimates the highest temperature reached or the lowest temperature reached from the relationship between color density and temperature of the specified thermosensitive material and the color density estimated by the color density estimation unit.

FIG. 1

Printed by Jouve, 75001 PARIS (FR)

**Description**

Technical Field

The present invention relates to a temperature evaluation system that evaluates temperature from color density of a thermosensitive material, and an article management system using the temperature evaluation system.

Background Art

Environmental conditions such as temperature, humidity, vibration, gas, and atmospheric pressure must be appropriately controlled for some of articles transported from a manufacturing site to a consumption site. For example, some article becomes unsuitable for consumption due to rot or change of taste under a high or low temperature environment. For some article, quality deterioration occurs under a high-humidity environment or an environment containing oxygen at an atmospheric level. Some article is broken when it is vibrated more vigorously than expected.

To address such a problem, a measure is performed during transportation or storage of an objective article. That is, the article is kept in an airtight container, or an air conditioner is used to perform temperature management, humidity management, or vibration management of a transportation container, a transportation track, or a storage chamber.

However, such a condition may be deviated from a management range due to device failure or lack of management. A temperature indicator is thus used to determine whether such deviation occurs.

Patent literature 1 discloses a temperature management method using a thermosensitive component exhibiting different color optical densities depending on temperatures. The patent literature discloses that temperature is managed by applying light having a wavelength corresponding to the absorption wavelength of a color of the thermosensitive component in a colored state and detecting reflected light intensity or transmitted light intensity of the light.

Patent literature 2 discloses a temperature management method for reading storage environment of an article by a temperature management component including a thermosensitive component that is provided on a support surface while exhibiting different color optical densities depending on temperatures, where a plurality of thermosensitive components having different temperature characteristics and time characteristics are provided, and color optical densities of such thermosensitive components are measured, and environment temperature and time of storage of the article are specified through operation based on the respective color optical densities.

Citation List

Patent Literature

Patent Literature 1: Japanese Unexamined Patent Application Publication No. 2001-91368.
Patent Literature 2: Japanese Unexamined Patent Application Publication No. 2000-131152.

Summary of Invention

Technical Problem

The thermosensitive component used in each of the patent literatures 1 and 2 changes its color optical density in response to temperature, and indicates temperature and exposure time by the color optical density. It is therefore possible to specify average storage temperature and the exposure time by measuring the color optical density. However, no consideration is given for measurement of the highest temperature reached or the lowest temperature reached.

The object of the invention is therefore to provide a temperature evaluation device capable of evaluating the highest temperature reached or the lowest temperature reached from the color optical density of the thermosensitive material, and provide an article management system using the temperature evaluation device.

Solution to Problem

To solve the above-described problem, a temperature evaluation system according to the present invention, which evaluates temperature of an indicator using a thermosensitive material, is characterized by including: a read-in device that acquires image data on the indicator; a storage device that stores relationships between color densities and temperatures for respective thermosensitive materials; and a processing device including a color density estimation unit that estimates the color density of the thermosensitive material from the image data, a material identification unit that specifies the thermosensitive material used in the indicator, and a temperature estimation unit that selects a relationship between a color density and a density of the thermosensitive material specified by the material identification unit from among the relationships between the color densities and the temperatures for the respective thermosensitive materials, and estimates highest temperature reached or lowest temperature reached from the relationship between the color density and the density of the specified thermosensitive material and the color density estimated by the color density estimation unit.

Advantageous Effects of Invention

According to the invention, it is possible to provide a temperature evaluation system capable of evaluating the highest temperature reached or the lowest temperature reached from a color optical density of a thermosensitive material, and provide an article management system.

Brief Description of Drawings

Fig. 1 shows a configuration of a temperature evaluation device of a first embodiment.
Fig. 2 shows a temperature-to-color density curve of a thermosensitive material.
Fig. 3 is a top view of an indicator according to one embodiment.
Fig. 4 is a top view of an indicator according to one embodiment.
Fig. 5 is a top view of an indicator according to one embodiment.
Fig. 6 shows an example of sample data of temperature and color density of a thermosensitive material.
Fig. 7 is a characteristic graph on temperature and color density of a thermosensitive material.
Fig. 8 shows a configuration of an article management system of the first embodiment.
Fig. 9 shows a configuration of a temperature evaluation system of a second embodiment.
Fig. 10 shows a configuration of a temperature evaluation system of a third embodiment.
Fig. 11 shows a configuration of an article management system of a fourth embodiment.
Fig. 12 shows the configuration of the article management system of the fourth embodiment.

Description of Embodiments

Modes for carrying out the invention (hereinafter, referred to as embodiments) are now described in detail while appropriately referring to the drawings. Like reference signs designate the same parts throughout the drawings, and duplicated description is omitted.

First Embodiment

Temperature Evaluation System

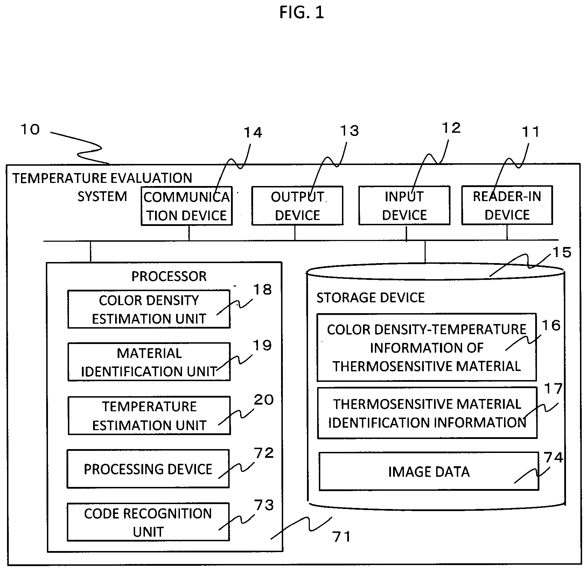

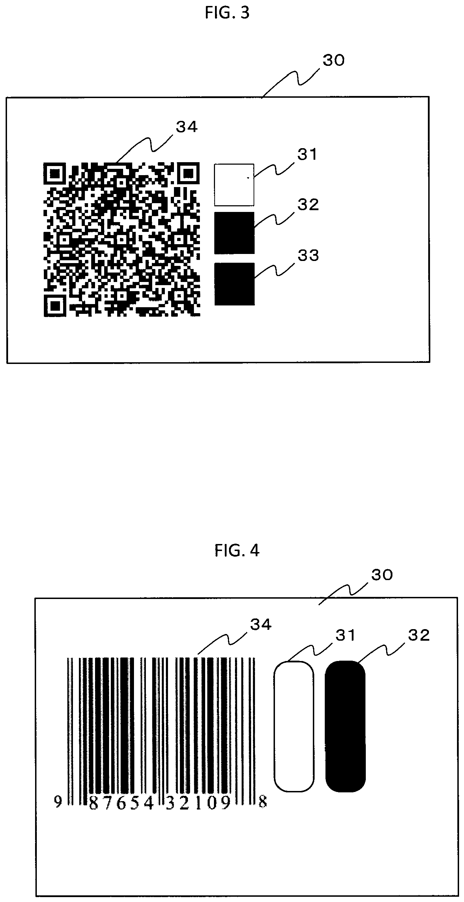

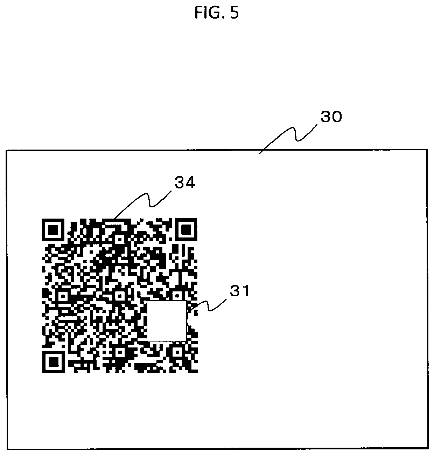

Fig. 1 shows a configuration of a temperature evaluation system of a first embodiment. The temperature evaluation system 10 includes a processing device 71, a read-in device 11 that acquires image data 74 on an indicator 30 (see Figs. 3 to 5) using a thermosensitive material, an input device 12, a storage device 15, an output device 13, and a communication device 14 that communicates with an external system or the like.

The storage device 15 stores color density-temperature information 16 of the thermosensitive material, which indicates a relationship between a color density and a temperature for each thermosensitive material, identification information 17 of the thermosensitive material (thermosensitive material identification information 17), and image data 74 acquired by the read-in device 11. The color density-temperature information 16 of the thermosensitive material, which relates to a peak characteristic of the temperature to the color density of the thermosensitive material, can be acquired by characteristic analysis as described later. The identification information 17 of the thermosensitive material includes, for example, ID of the thermosensitive material. The image data 74 are preferably stored together with time of date of reading, a location, and the like.

The storage device 15 includes synchronous dynamic random access memory (SDRAM), electrically erasable programmable read-only memory (EEPROM) (registered trademark), SD memory card, and the like.

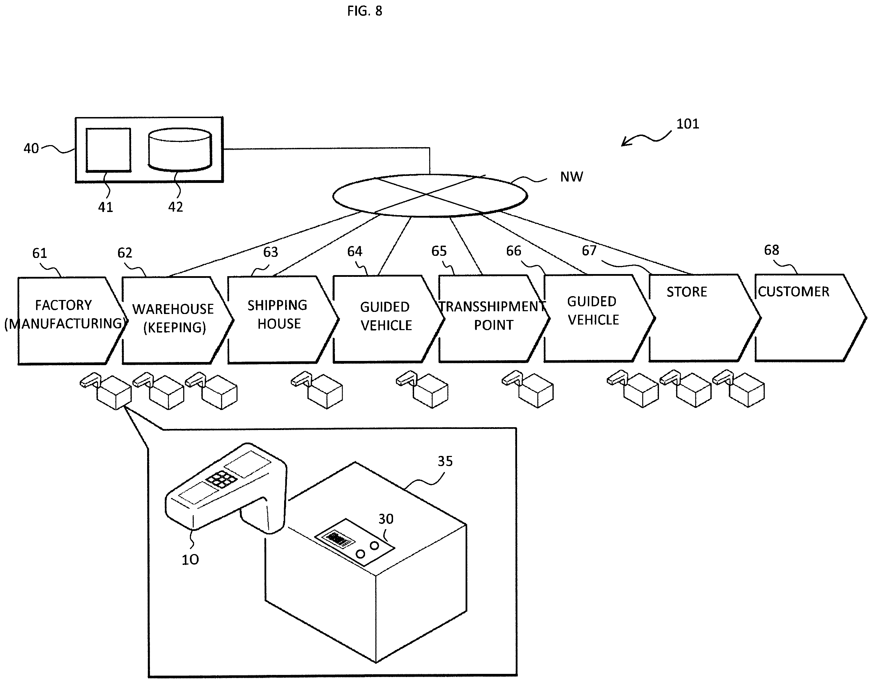

The input device 12 is a part that receives an instruction from an operator, and is configured of a button and a touch panel. The input device 12 can receive information that cannot be read by the read-in device 11. Examples of such information include the identification information 17 of the thermosensitive material used in the indicator 30, and a temperature management condition of an article 35 (see Fig. 8) to which the indicator 30 is attached.

The processing device 71 includes a color density estimation unit 18 that estimates color density of the thermosensitive material from the image data 74 read by the read-in device 11, a material identification unit 19 that specifies the thermosensitive material used in the indicator 30, and a temperature estimation unit 20 that selects a relationship between a color density and a temperature of the thermosensitive material specified by the material identification unit 19 from among the relationships between the color densities and the temperatures of the respective thermosensitive materials, and estimates the highest temperature reached or the lowest temperature reached from the relationship between the color density and the density of the specified thermosensitive material and the color density estimated by the color density estimation unit 18, a characteristic analysis unit 72 that creates the color density-temperature information 16 of the thermosensitive material stored in the storage device 15, and a code recognition unit 73 that recognizes various codes, such as a one-dimensional code and a two-dimensional code, provided on the indicator 30. The processing device 71 is embodied by executing a program on a memory by a central processing unit (CPU).

An image detector with a camera or the like can be used as the read-in device 11. The read-in device 11 may be any device capable of reading a color of the thermosensitive material and optical information. The numerical information of a color tone includes the RGB color space, the HSV color space, and the Munsell color space in addition to the CIE color space such as L*a*b* and L*C*h*. When the indicator 30 indicates the thermosensitive material identification information 17 by a letter, a numeral, or a code, the read-in device 11 collectively acquires the thermosensitive material identification information 17 as the image data 74.

The material identification unit 19 acquires, from the input device 12, the identification information 17 of the thermosensitive material used in the indicator 30. When the indicator 30 also indicates the thermosensitive material identification information 17, the material identification unit 19 acquires the identification information 17 of the thermosensitive material used in the indicator 30 from the image data 74 acquired by the read-in device 11.

The output device 13, which outputs instruction information for an operator, a reading image, a reading result, and the like, is configured of a display and the communication device 14. The output device 13 receives the highest temperature reached or the lowest temperature reached estimated by the temperature estimation unit 20, for example. In the first embodiment, a display device is used as the output device 13, so that the above-described results can be output and displayed so as to be checked by an operator or the like. The output device 13 may be connected to a recording medium such as a semiconductor memory to output and record the results into the recording medium, allowing information to be transferred to another information processing device via the recording medium and processed therein or to be output to another display device and displayed thereon.

Thermosensitive Material

The thermosensitive material changes color in response to temperature change. The thermosensitive material, which can be evaluated by the temperature evaluation system 10 of the first embodiment, may be any material that irreversibly changes color in a usable temperature range and that changes color density in a gradient manner depending on temperatures. Specifically, the thermosensitive material changes color density at a certain gradient with an increase in temperature at a predetermined temperature or higher, or changes color density at a certain gradient with a decrease in temperature at a predetermined temperature or lower. This is because if a material irreversibly changes color in a usable temperature range, even if temperature reaches the maximum or the minimum and then returns to another temperature, the material can maintain a color-changed state at a temperature of the maximum, the minimum, or a peak value.

The thermosensitive material preferably changes color in a short time after reaching the color change temperature. This is because if the thermosensitive material changes color in a long time after reaching the color change temperature, a color tone of the thermosensitive material may be observed while the color change is still not completed.

For example, a composite including a leuco die as an electron-donating compound, a color developing agent as an electron-accepting compound, and a decoloring agent to control a decoloring temperature range can be preferably used as the thermosensitive material to allow the highest temperature reached or the lowest temperature reached to be estimated by the temperature evaluation system 10 according to one embodiment of the invention.

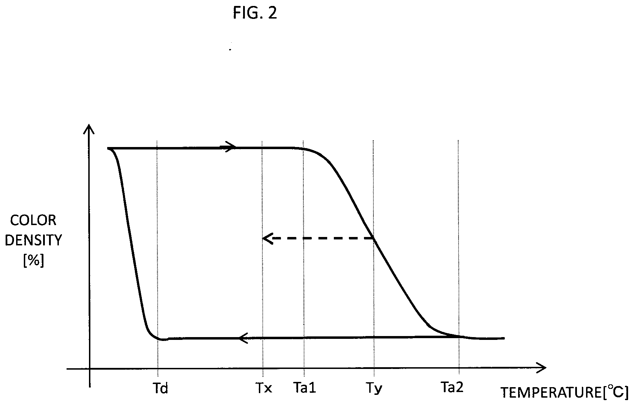

Fig. 2 shows reversible color change of such a composite with temperature changes. In Fig. 2, the horizontal axis represents temperature, and a vertical axis represents color density. For example, the material shown in Fig. 2 decreases its color density at a temperature of $T_{a1}$ during heating, and gradually changes into a state of the lowest color density (decoloring state) with temperature rise until $T_{a2}$. Such a color change occurs when a state of the composite changes from a solid to a liquid. That is, the color change is caused by a melting phenomenon of the composite. Although the melting phenomenon occurs at a melting point of the material, if the melting point has a temperature range, i.e., has a maximum temperature and a minimum temperature, melting of the material is not completed unless temperature reaches the maximum temperature of the melting point. For the material shown in Fig. 2, color density decreases at the minimum temperature $T_{a1}$ of the melting point of the composite. The material changes into the state of the lowest color density (decoloring state) at the maximum temperature $T_{a2}$ of the melting point of the composite. This means that the material changes a color state in a gradient manner depending on temperatures. The material melts at the melting point for a certain time that is about several seconds to several minutes at a weight of about several milligrams to several grams while the time depends on the weight and the melting heat of the material.

In other words, color change to the final color-changed state at the melting point is completed in about several seconds to several minutes, and further color change does not occur.

When such a composite is cooled from the decoloring state, the composite maintains the decoloring state until $T_d$, but increases its color density at $T_d$ and changes into a coloring state. That is, the color change of the composite occurs in a reversible manner. However, when a temperature difference exists between the minimum temperature $T_{a1}$ of the melting point and $T_d$, the color change can be treated in the same manner as in an irreversible manner unless operating temperature becomes lower than $T_d$. Such a reversible color change cycle is generally known as a hysteresis color change phenomenon. The color change at $T_d$ occurs when the state of the composite changes from the liquid to the solid. That is, the color change is caused by a solidification phenomenon of the composite. Specifically, a preferably usable material has a large temperature difference between the minimum temperature $T_{a1}$ of the melting point and the solidification point $T_d$, i.e., has a large hysteresis width.

Color density change of the material at the highest temperature reached is described. When temperature changes from the initial temperature $T_x$ to the highest temperature reached $T_y$ and the material is completely melted, the color density reaches a final color-changed state at $T_y$ at which further color change does not occur. Thereafter, even if temperature returns from $T_y$ to $T_x$, since color density does not change unless temperature becomes higher than $T_y$, the color density can be maintained at the highest temperature reached.

To achieve such properties, any combination of the leuco dye, the color developing agent, and the decoloring agent may be used without limitation as long as the combination exhibits the hysteresis color change phenomenon as shown in Fig. 2. Specific materials are shown in the following.

Leuco Dye

The leuco dye, which is an electron-donating compound, usably includes known leuco dyes for pressure sensitive copying paper or thermal paper. Examples of such a dye include dyes of triphenylmethane phthalide series, fluoran series, phenothiazine series, indolyl phthalide series, leuco auramine series, spiropyran series, rhodamine lactam series, triphenylmethane series, triazene series, spirophthalan xanthene series, naphtholactam series, and azomethine series. Specific examples of the leuco dye include 9-(N-ethyl-N-isopentylamino)spiro[benzo[a]xanthene-12, 3'-phthalide], 2-methyl-6-(Np-tolyl-N-ethylamino)fluoran-6-(diethylamin o)-2-[(3-trifluoromethyl)anilino] xanthene-9-spiro-3'-phthalide, 3, 3-bis(p-diethylaminophenyl)-6-diethylamino phthalide, 2'-anilino-6'-(dibutylamino)-3'-methylspiro[phthalide-3, 9'-xanthene], 3-(4-diethylamino-2-methylphenyl)-3-(1-ethyl-2-methylind ole-3-yl)-4-azaphthalide, and 1-ethyl-8-[N-ethyl-N-(4-methylphenyl)amino]-2, 2, 4-trimethyl-1,2-dihydrospiro[11H-chromeno[2, 3-g]quinoline-1,1,3'-phthalide]. At least two leuco dyes may be used in combination for the thermosensitive material.

Color-Developing Agent

The color-developing agent changes a structure of the leuco dye for coloration through contact with the electron-donating leuco dye. The color-developing agent usably includes known color-developing agents for pressure sensitive copying paper or thermal paper. Specific examples of such a color-developing agent may include phenols such as benzyl 4-hydroxybenzoate, 2, 2'-biphenol, 1,1-bis(3-cyclohexyl-4-hydroxyphenyl)cyclohexane, 2, 2-bis(3-cyclohexyl-4-hydroxyphenyl)propane, bisphenol A, bisphenol F, bis(4-hydroxyphenyl)sulfide, para-hydroxybenzoate, and gallic acid ester. Any compound can be used without limitation as long as the compound is an electron acceptor and capable of changing a color of the leuco dye. In addition, metallic salts of carboxylic acid derivatives may also be used, such as salicylic acid and salicylate metal salts, sulfonic acids, sulfonate salts, phosphoric acids, phosphate metal salts, acid phosphate esters, acid phosphate metal salts, phosphorous acids; and phosphite metal salts. In particular, the color-developing agent preferably includes agents highly compatible with the leuco dye or the decolorant as described later, specifically organic color-developing agents such as benzyl 4-hydroxybenzoate, 2, 2'-biphenol, bisphenol A, and gallic acid esters.

The thermosensitive material according to the first embodiment may include such color-developing agents singly or in combination. Color density of the leuco dye in the colored state can be adjusted through a combination of the color-developing agents. Usage of the color-developing agent is selected depending on a desired color density. For example, the usage may be typically selected within a range from about 0.1 to 100 wt. part for 1 wt. part of the leuco dye.

Decolorant

The decolorant is a compound that can dissociate the bond of the leuco dye and the color-developing agent and can control the coloring temperature of the leuco dye with the color-developing agent. The decolorant is typically solidified in a phase-separated state in a temperature range in which the leuco dye is colored. In a temperature range in which the leuco dye is decolored, the decolorant is melted and exhibits the function of dissociating the bond of the leuco dye and the color-developing agent. The state change temperature of the decolorant is therefore important to control temperature of the thermosensitive material.

Any material can be used as a material of the decolorant as long as the material can dissociate the bond of the leuco dye and the color-developing agent. Various materials may each be used as the decolorant as long as the material exhibits no color developing property to the leuco dye, and has a polarity high enough to dissolve the leuco dye and the color-developing agent. Various organic compounds can be typically used, such as hydroxy compounds, ester compounds, peroxy compounds, carbonyl compounds, aromatic compounds, aliphatic compounds, halides, amino compounds, imino compounds, N-oxide compounds, hydroxylamine compounds, nitro compounds, azo compounds, diazo compounds, azide compounds, ether compounds, fatty compounds, sugar compounds, peptide compounds, nucleic acid compounds, alkaloid compounds, and steroid compounds. Specifically, the decolorant includes ester compounds such as tricaprin, isopropyl myristate, m-tolyl acetate, diethyl sebacate, dimethyl adipate, 1,4-diacetoxybutane, decanoic acid decyl ester, diethyl phenylmalonate, diisobutyl phthalate, triethyl citrate, benzyl butyl phthalate, butyl phthalyl butyl glycolate, methyl N-methylanthranilate, ethyl anthranilate, 2-hydroxyethyl salicylate, methyl nicotinate, butyl 4-aminobenzoate, methyl p-toluate, ethyl 4-nitrobenzoate, 2-phenylethyl phenylacetate, benzyl cinnamate, methyl acetoacetate, geranyl acetate, dimethyl succinate, dimethyl sebacate, diethyl oxalacetate, monoolein, butyl palmitate, ethyl stearate, methyl palmitate, methyl stearate, linalyl acetate, di-n-octyl phthalate, benzyl benzoate, diethylene glycol dibenzoate, methyl p-anisate, m-tolyl acetate, cinnamyl cinnamate, 2-phenylethyl propionate, butyl stearate, ethyl myristate, methyl myristate, methyl anthranilate, neryl acetate, isopropyl palmitate, ethyl 4-fluorobenzoate, 3,3,5-trimethylcyclohexyl mandelate (mixture of isomers), butopyronoxyl, ethyl 2-bromopropionate, tricaprilin, ethyl levulinate, hexadecyl palmitate, tert-butyl acetate, 1,1-ethanediol diacetate, dimethyl oxalate, tristearin, methyl acetylsalicylate, benzal diacetate, methyl 2-benzoylbenzoate, ethyl 2,3-dibromobutyrate, ethyl 2-furancarboxylate, ethyl 2,4-dioxovalerate, ethyl vanillate, dimethyl itaconate, methyl 3-bromobenzoate, monoethyl adipate, dimethyl adipate, 1,4-diacetoxybutane, diethylene glycol diacetate, ethyl palmitate, diethyl terephthalate, phenyl propionate, phenyl stearate, 1-naphthyl acetate, methyl behenate, methyl arachidate, methyl 4-chlorobenzoate, methyl sorbate, ethyl isonicotinate, dimethyl dodecanedioate, methyl heptadecanoate, ethyl $\alpha$-cyanocinnamate, N-phenylglycine ethyl ester, diethyl itaconate, methyl picolinate, methyl isonicotinate, methyl DL-mandelate, methyl 3-aminobenzoate, methyl 4-methylsalicylate, diethyl benzylidenemalonate, isoamyl DL-mandelate, triethyl methanetricarboxylate, diethyl formamidomalonate, 1,2-bis(chloroacetoxy)ethane, methyl pentadecanoate, ethyl arachidate, ethyl 6-bromohexanoate, monoethyl pimelate, hexadecyl lactate, ethyl benzilate, mefenpyr-diethyl, procaine, dicyclohexyl phthalate, 4-tert-butylphenyl salicylate, isobutyl 4-aminobenzoate, butyl 4-hydroxybenzoate [for biochemical research], tripalmitin, 1,2-diacetoxybenzene, dimethyl isophthalate, monoethyl fumarate, methyl vanillate, methyl 3-amino-2-thiophenecarboxylate, etomidate, cloquintocet-mexyl, methyl benzilate, diphenyl phthalate, phenyl benzoate, propyl 4-aminobenzoate, ethylene glycol dibenzoate, triacetin, ethyl pentafluoropropionate, methyl 3-nitrobenzoate, 4-nitrophenyl acetate, methyl 3-hydroxy-2-naphthoate, trimethyl citrate, ethyl 3-hydroxybenzoate, methyl 3-hydroxybenzoate, trimebutine, 4-methoxybenzyl acetate, pentaerythritol tetraacetate, methyl 4-bromobenzoate, ethyl 1-naphthaleneacetate, 5-nitro-2-furaldehyde diacetate, ethyl 4-aminobenzoate, propylparaben, 1,2,4-triacetoxybenzene, methyl 4-nitrobenzoate, diethyl acetamidomalonate, valethamate bromide, 2-naphthyl benzoate, dimethyl fumarate, adiphenine hydrochloride, benzyl 4-hydroxybenzoate, ethyl 4-hydroxybenzoate, vinyl butyrate, vitamin K$_4$, methyl 4-iodobenzoate, methyl 3,3-dimethylacrylate, propyl gallate, 1,4-diacetoxybenzene, diethyl mesoxalate, dimethyl 1,4-cyclohexanedicarboxylate (mixture of cis- and trans-), triethyl 1,1,2-ethanetricarboxylate, dimethyl hexafluoroglutarate, amyl benzoate, ethyl 3-bromobenzoate, ethyl 5-bromo-2-chlorobenzoate, bis(2-ethylhexyl) phthalate, diethyl allylmalonate, diethyl bromomalonate, diethyl ethoxymethylenemalonate, diethyl ethylmalonate, diethyl fumarate, diethyl maleate, diethyl malonate, diethyl phthalate, dimethyl 1,3-acetonedicarboxylate, dimethyl phthalate, ethyl 3-aminobenzoate, ethyl benzoate, ethyl 4-dimethylaminobenzoate, ethyl nicotinate, ethyl phenylpropiolate, ethyl pyridine-2-carboxylate, ethyl 2-pyridylacetate, ethyl 3-pyridylacetate, methyl benzoate, ethyl phenylacetate, amyl 4-hydroxybenzoate, 2,5-diacetoxytoluene, ethyl 4-oxazolecarboxylate, trimethyl 1,3,5-cyclohexanetricarboxylate (mixture of cis-and trans-), methyl 3-(chlorosulfonyl)-2-thiophenecarboxylate, pentaerythritol distearate, benzyl laurate, diethyl acetylenedicarboxylate, phenyl methacrylate, benzyl acetate, dimethyl glutarate, ethyl 2-oxocyclohexanecarboxylate, ethyl phenylcyanoacetate, ethyl 1-piperazinecarboxylate, methyl benzoylformate, methyl phenylacetate, phenyl acetate, diethyl succinate, tributyrin, diethyl methylmalonate, dimethyl oxalate, diethyl 1,1-cyclopropane dicarboxyliate, dibenzyl malonate, methyl 4-tert-butylbenzoate, ethyl 2-oxocyclopentanecarboxylate, methyl cyclohexanecarboxylate, ethyl 2-(4-methoxyphenyl)acetate, methyl 4-fluorobenzoylacetate, dimethyl maleate, methyl terephthalaldehydate, ethyl 4-bromobenzoate, methyl 2-bromobenzoate, methyl 2-iodobenzoate, ethyl 3-iodobenzoate, ethyl 3-furancarboxylate, diallyl phthalate, benzyl bromoacetate, dimethyl bromomalonate, methyl m-toluate, diethyl 1,3-acetonedicarboxylate, methyl phenylpropiolate, 1-naphthyl butyrate, ethyl o-toluate, methyl 2-oxocyclopentanecarboxylate, isobutyl benzoate, ethyl 3-phenylpropionate, di-tert-butyl malonate, dibutyl sebacate, diethyl adipate, diethyl terephthalate, dipropyl phthalate, 1,1-ethanediol diacetate, diisopropyl adipate, diisopropyl fumarate, ethyl cinnamate, 2-ethylhexyl 2-cyano-3,3-diphenylacrylate, neopentyl glycol diacrylate, triolein, ethyl benzoylacetate, ethyl p-anisate, diethyl suberate, sorbitan tristearate, sorbitan monostearate, stearamide, glycerol monostearate, glycerol distearate, 3-(tert-butoxycarbonyl)phenylboronic acid, racecadotril, 4-[(6-acryloyloxyethy)hexyloxy]-4'-cyanobiphenyl, 2-(dimethylamino)vinyl 3-pyridyl ketone, stearyl acrylate, ethyl 4-bromophenylacetate, dibenzyl phthalate, methyl 3,5-dimethoxybenzoate, eugenol acetate, didodecyl 3,3'-thiodipropionate, vanillin acetate, diphenyl carbonate, ethyl oxanilate, methyl terephthalaldehydate, dimethyl 4-nitrophthalate, ethyl (4-nitrobenzoyl)acetate, dimethyl nitroterephthalate, methyl 2-methoxy-5-(methylsulfonyl)benzoate, methyl 3-methyl-4-nitrobenzoate, dimethyl 2,3-naphthalenedicarboxylate, bis-(2-ethylhexyl) adipate, 4'-acetoxyacetophenone, ethyl trans-3-benzoylacrylate, ethyl coumarin-3-carboxylate, BAPTA tetraethyl ester, methyl 2,6-dimethoxybenzoate, di-tert-butyl iminodicarboxylate, benzyl p-benzyloxybenzoate, methyl 3,4,5-trimethoxybenzoate, methyl 3-amino-4-methoxybenzoate, ethylene glycol distearate, ditetradecyl 3,3'-thiodipropionate, ethyl 4-nitrophenylacetate, methyl 4-chloro-3-nitrobenzoate, 1,4-dipropionyloxybenzene, dimethyl terephthalate, ethyl 4-nitrocinnamate, dimethyl 5-nitroisophthalate, triethyl 1,3,5-benzenetricarboxylate, diethyl N-(4-aminobenzoyl)-L-glutamate, 2-methyl-1-naphthyl acetate, 7-acetoxy-4-methylcoumarin, methyl 4-amino-2-methoxybenzoate, 4,4'-diacetoxybiphenyl, dimethyl 5-aminoisophthalate, diethyl 1,4-dihydro-2,6-dimethyl-3,5-pyridinedicarboxylate, dimethyl 4,4'-biphenyldicarboxylate; and steroid compounds such as cholesterol, cholesteryl bromide, $\beta$-estradiol, methylandrostenediol, pregnenolone, cholesterol benzoate, cholesterol acetate, cholesterol linoleate, cholesterol palmitate, cholesterol stearate, Cholesterol n-Octanoate, cholesteryl oleate, cholesteryl chloride, cholesterol trans-cinnamate, cholesteryl decanoate, cholesterol hydrocinnamate, cholesterol laurate, cholesterol butyrate, cholesterol formate, cholesterol heptanoate, cholesterol hexanoate, cholesterol hydrogen succinate, cholesterol myristate, cholesterol propionate, cholesterol valerate, cholesterol hydrogen phthalate, cholesterol phenylacetate, cholesterol chloroformate, cholesterol 2,4-dichlorobenzoate, cholesterol pelargonate, cholesterol nonyl carbonate, cholesterol heptyl carbonate, cholesterol oleyl carbonate, cholesterol methyl carbonate, cholesterol ethyl carbonate, cholesterol isopropyl carbonate, cholesterol butyl carbonate, cholesterol isobutyl carbonate, cholesterol amyl carbonate, cholesterol n-octyl carbonate, cholesterol hexyl carbonate, allylestrenol, altrenogst, 9(10)-dehydronandrolo-ne, estrone, ethynylestradiol, estriol, estradiol benzoate, $\beta$-estradiol 17-cypionate, $\beta$-estradiol 17-valerate, $\alpha$-estradiol, $\beta$-estradiol 17-heptanoate, gestrinone, mestranol, 2-methoxy-$\beta$-estradiol, nandrolone, (-)-norgestrel, quinestrol, trenbolone, tibolone, stanolone, androsterone, abiraterone, abiraterone acetate, dehydroepiandrosterone, dehydroepiandros-terone acetate, ethisterone, epiandrosterone, 17$\beta$-hydroxy-17-methylandrosta-1,4-dien-3-one, methylandrostenediol, methyltestosterone, $\Delta^{9(11)}$-Methyltestosterone, 1$\alpha$-methylandrostan-17$\beta$-ol-3-one, 17$\alpha$-methylandrostan-17$\beta$-ol-3-one, stanozolol, testosterone, testosterone propionate, altrenogest, 16-dehydropregnenolone acetate, acetic acid 16, 17-epoxypregn, 11$\alpha$-hydroxyprogesterone, 17$\alpha$-hydroxyprogesterone caproate, 17$\alpha$-hydroxyprogesterone, pregnenolone acetate, 17$\alpha$-hydroxyprogesterone acetate, megestrol acetate, medroxyprogesterone acetate, pregnenolone acetate, 5$\beta$-pregnane-3$\alpha$,20$\alpha$-diol, budesonide, corticosterone, cortisone acetate, cortisone, cortexolone, deoxycorticosterone acetate, deflazacort, hydrocortisone acetate, hydrocortisone, hydrocortisone 17-butyrate, 6$\alpha$-methylprednisolone, pred-nisolone, prednisone, prednisolone acetate, sodium deoxycholate, sodium cholate, methyl cholate, methyl hyodeoxy-cholate, $\beta$-cholestanol, cholesterol-5$\alpha$,6$\alpha$-epoxide, diosgenin, ergosterol, $\beta$-sitosterol, stigmasterol, and $\beta$-sitosterol ac-etate. Such compounds are preferably contained in light of compatibility with each of the leuco dye and the color-developing agent. Naturally, any material can be used without limiting to the compounds as long as the material can dissociate the bond of the leuco dye and the color-developing agent.

Such decolorants may be used singly or in combination. Combination of the decolorants makes it possible to adjust the solidification point and the melting point.

In the first embodiment, a larger difference between the minimum temperature and the maximum temperature of the melting point is more preferable for recording the highest temperature reached. To achieve such a property, combination of two or more decolorants is more preferable than a single material as the decolorant. The combination of two or more decolorants prevents the melting point from having one temperature, leading to a difference between the minimum temperature and the maximum temperature of the melting point.

A material having a large molecular weight such as polymer can also be preferably used as the decolorant. The material having a large molecular weight such as polymer largely has distribution of the molecular weight, accordingly leading to a large temperature range of the melting point. This results in a large difference between the minimum temperature and the maximum temperature of the melting point of the decolorant.

Usage of the decolorant is selected depending on a desired color density. For example, the usage may be typically selected within a range from about 1 to 1000 wt. part for 1 wt. part of the leuco dye.

A fourth material may be used in a combinable manner to increase the difference between the minimum temperature and the maximum temperature of the melting point of the decolorant as long as the material does not impair the color developing property and the decoloring property of the thermosensitive material. Such combined use of the fourth material causes the melting point to have the minimum and the maximum instead of having one temperature, leading to a difference between the minimum temperature and the maximum temperature of the melting point as in the case of the combination of two or more decolorants. A preferred fourth material does not exhibit the color developing property itself. A nonpolar material, which is therefore not an electron acceptor, can be used as such a material. The nonpolar material specifically includes nonpolar solvents such as hexane, benzene, and toluene; oils such as petroleum, mineral oil, and silicone oil; waxes of paraffin series, microcrystalline series, olefin series, polypropylene series, and polyethylene series; and low molecular materials or high molecular materials having many skeletons of propylene, ethylene, styrene, cycloolefin, siloxane, or terpene, and copolymers thereof.

Usage of the fourth material is selected depending on a desired property of the melting point. For example, the usage may be typically selected within a range from about 0.1 to 1000 wt. part for 1 wt. part of the leuco dye.

The invention does not limit types or configurations of such materials, and any material can be used as long as the material changes a color state in a gradient manner depending on temperatures.

Indicator Using Thermosensitive Material

The indicator 30 (see Figs. 3 to 5) using the thermosensitive material may be any indicator configured of the thermosensitive material and allowing temperature change to be detected through color change of the indicator. Since the temperature evaluation system 10 needs to acquire the identification information 17 of the thermosensitive material, the indicator 30 preferably has the thermosensitive material identification information 17. The thermosensitive material identification information 17 may be represented by numerals or letter strings or in a form of a one-dimensional code or a two-dimensional code.

Figs. 3 to 5 each show a top view of an indicator according to one embodiment. The indicator 30 is configured by a one-dimensional or two-dimensional code 34 and thermosensitive materials 31, 32, and 33. In the one-dimensional or two-dimensional code, a letter string of numerals and/or alphabets is represented as a pattern. The one-dimensional or two-dimensional code may have data concerning the number, a type, and a position of the thermosensitive material in addition to the thermosensitive material identification information 17. Although various standards exist for the code in addition to dimension, the invention does not depend on such standards. Further, although various conversion processing methods may each be performed for patterning the letter string, the invention does not depend on such processing methods.

Although a position, a shape, size, the number, and the like of the thermosensitive material are not limited, they are each preferably easy to be captured in a form of an image together with the code during data reading. For example, the position is preferably in the vicinity of the code. The shape may include any shape without limitation, such as a rectangle, a circle, an ellipse, and a round-corner rectangle. The size is preferably larger than a size of a bar or a dot of the code. The size may be increased to facilitate visual check. It is possible to grasp a plurality of environmental conditions at a time by arranging a plurality of environmentally changeable portions having different changing conditions. Possible examples of such portions include a plurality of portions changing at different temperatures, and a combination of temperature and humidity. The thermosensitive materials may have either the same shape or size, or different shapes or sizes. For the one-dimensional code, since data reading may be linearly performed, as shown in Fig. 4, height of each thermosensitive material is preferably aligned with the length of the bar of a barcode while the thermosensitive materials are arranged in the same direction as arrangement of the bars, but the invention is not limited to such arrangement.

Each of the indicators 30 may be formed by directly printing the thermosensitive material on the article 35 (see Fig. 8), or may be formed in such a manner that the thermosensitive material is printed on a seal and the seal is stuck on a commodity. In addition, a letter string represented by a code may be printed near the code in a letter form. The changing color is preferably additionally written by letters or the like with a color in a range of an appropriate environmental condition and a color under a condition deviating from the condition.

Data Processing Method

The color density-temperature information 16 of the thermosensitive material stored in the storage device 15 can be obtained by conversion from sample data of color density against temperature of the thermosensitive material to a graph showing a characteristic of the color density against the temperature and an error range, for example. In this description, the graph showing the characteristic of the color density against the temperature is referred to as characteristic graph. The characteristic graph is preferably recorded in the storage device 15 in a data format including a parameter value of a type or a coefficient of a function such as a polynomial function or an exponential function and a parameter value of weight or threshold of a Radial Basis Function Network or a neural network NW. The error range is recorded in a form of statistical dispersion, $3\sigma$, or the maximum and the minimum of a sample data.

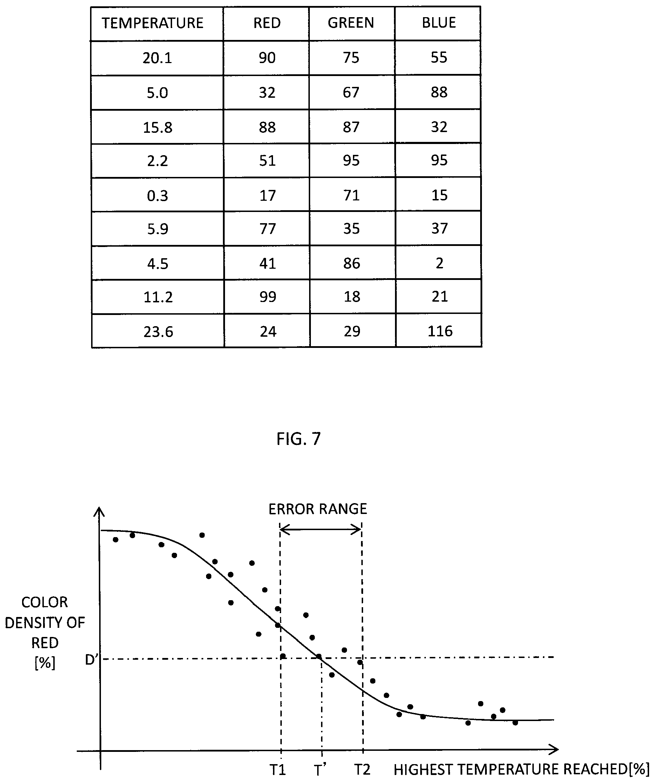

Fig. 6 shows an example of sample data for color densities of an RGB color sample. Fig. 6 shows the color densities of red, green, and blue at various temperatures in a table format.

Fig. 7 shows an example of a characteristic graph converted from the sample data. In the characteristic graph of Fig. 7, dots represent the sample data, and the solid straight or curved line has a minimum distance from any of the sample data. In this description, the straight line or the curved line is referred to as characteristic curve. The characteristic curve can be obtained by a regression analysis method, such as linear regression, k-nearest neighbor algorithm, regression tree, neural network, support vector regression, projection pursuit regression, and random forest. The error range can be obtained by a typical method such as dispersion of sample data and Bayesian analysis. Since the characteristic graph and the error range are each different depending on channels representing the color density, such as R, G, and B of the RGB color sample, the data are preferably recorded for each channel.

The characteristic graph and the error range as shown in Fig. 7 may be obtained from a database outside the temperature evaluation system 10 via the network NW, or may be created within the processing device 71 of the temperature evaluation system 10. In the temperature evaluation system 10 including the characteristic analysis unit 72 in the processing device 71, the characteristic graph can be created in the processing device 71.

In the first embodiment, a method of creating the characteristic graph in the processing device 71 is described. First, sample data of the color density against the temperature of the thermosensitive material as shown in Fig. 6 is received by the input device 12. The characteristic analysis unit 72 analyzes the received sample data and creates the characteristic graph and the error range. The created characteristic graph and error range are stored in the storage device 15 as the color density-temperature information 16 of the thermosensitive material. The read-in device 11 reads the image data 74 on the indicator 30 (see Figs. 3 to 5) using the thermosensitive material. The image data 74 are stored in the storage device 15.

The color density estimation unit 18 estimates color density of the thermosensitive material from the read image data 74.

The material identification unit 19 specifies the thermosensitive material used in the indicator 30. When the thermosensitive material identification information 17 is received by the input device 12, the material identification unit 19 specifies the thermosensitive material based on the identification information. When the indicator 30 displays the thermosensitive material identification information 17, the thermosensitive material is specified based on the image data 74 read by the read-in device 11. When the indicator 30 displays the thermosensitive material identification information in a form of a one-dimensional code or a two-dimensional code, the information represented by the code is acquired by the code recognition unit 73 in the processing device 71. The material identification unit 19 specifies the thermosensitive material based on the information acquired by the code recognition unit 73.

The temperature estimation unit 20 estimates temperature corresponding to the color density estimated by the color density estimation unit 18 from the characteristic graph showing a relationship between temperature and color density of the thermosensitive material specified by the material identification unit 19 and the error range of the graph. In Fig. 7, the highest temperature reached of management temperature is estimated using a value of the channel R in the RGB color sample. In the characteristic curve of Fig. 7, the highest temperature reached corresponding to the R channel value D' is represented by T', and the error range is represented by T1 to T2. The estimated highest temperature reached is stored in the storage device 15.

The estimated highest temperature reached may be output to a display or the like by the output device 13, or may be transmitted to an external system via the communication device 14.

The temperature evaluation system 10 of the first embodiment can be achieved by a versatile smartphone having a camera, a screen, and the communication device 14. However, the invention is not limited to such an embodiment.

Article Management System

An article management method and an article management system each using the temperature management system are described below. Fig. 8 shows a block diagram of the article management system of the first embodiment. The article management system 101 includes the temperature evaluation system 10, a management server 40 (management device), and management terminals 61 to 68, where the temperature evaluation system 10, the management server 40, and the management terminals 61 to 68 are communicatively connected together via the network NW. The management terminals 61 to 68 are disposed at the respective carriage bases of the article 35. The management server 40 includes a processing unit 41, a storage unit 42, an input unit, an output unit, and a communication unit. The management terminals 61 to 68 each include a processing unit, a storage unit, an input unit, an output unit, and a communication unit.

The method and the system are described with exemplary quality control in a distribution route in which the article 35 is manufactured in a factory, carried to a store, managed in the store, and then provided to a customer.

The article 35 is produced in the factory and delivered to the store via a warehouse that keeps the article 35, a shipping house, a first guided vehicle, a transshipment point in which the article 35 is transshipped to a second guided vehicle, and the second guided vehicle. In each site, an operator collects temperature data of the article 35 using one of the management terminals 61 to 68. As described above, the indicator 30 is attached to the article 35.

The temperature data are collected at various timings, for example, when the article 35 is manufactured in the factory, before shipping in the shipping house, just before the article is carried by the first guided vehicle from the shipping house, just after the guided vehicle has carried the article to the transshipment point, just before the article is carried from the transshipment point to the shop, just after the second guided vehicle has carried the article to the store (when the article arrives at the store), and when the article is kept for sale in the store 67.

In each base, an operator can check a color tone of the thermosensitive material to visually check a temperature management condition in each process and a temperature load state of the article 35. In addition to such visual check, the operator acquires the image data 74 (see Fig. 1) of the thermosensitive material using the temperature evaluation system 10 and estimates the highest temperature reached or the lowest temperature reached. The information of the estimated highest temperature reached or the lowest temperature reached is transmitted to the management server 40 that then stores the information as temperature management information. The management server 40 swaps information with the temperature evaluation system 10 and the management terminals 61 to 68.

Consequently, a manager can acquire the highest temperature reached or the lowest temperature reached in a distribution process of the article 35 to be managed. In addition, an operator in each base can connect to the management server 40 via one of the management terminals 61 to 68 to check the temperature management information up to delivery of the article 35.

To summarize, the article management system 101 of the first embodiment includes the temperature evaluation system 10 that collects the color tone information of the thermosensitive material attached to the article 35 to acquire the color tone information, and estimates the highest temperature reached or the lowest temperature reached of the article 35, the management device (for example, management server 40) that manages environment in which the article 35 is placed, and the management terminal 40 displaced in each base. Consequently, it is possible to centrally manage the temperature-indicating data acquired at each site in a distribution stage.

When the highest temperature reached or the lowest temperature reached is determined to be deviated from the management temperature range of the article 35, the display unit of each of the management terminals 61 to 68 may display that the article 35 is not appropriate for distribution. Consequently, an operator at each site in the distribution stage can instantly check whether an article 35 is currently appropriately transported.

Second Embodiment

A second embodiment is described with a temperature evaluation system 10 capable of obtaining the color density-temperature information 16 of the thermosensitive material from an external database 75 of the temperature evaluation system 10 via the network NW.

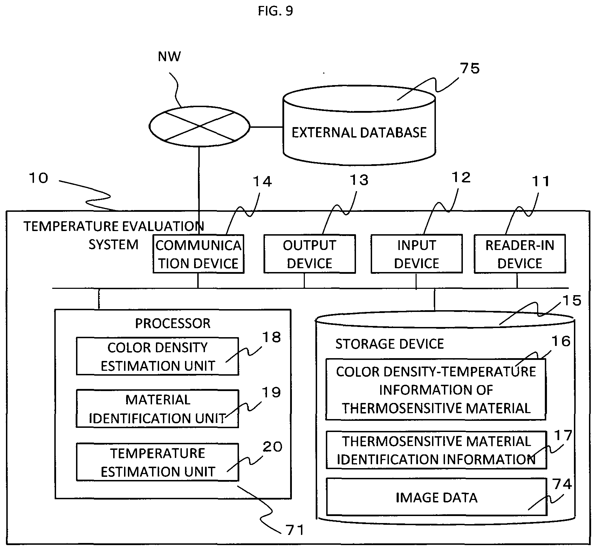

Fig. 9 shows a configuration of the temperature evaluation system 10 of the second embodiment. The communication device 14 connects to the external database 75 via the network NW.

When the temperature estimation unit 20 recognizes that the color density-temperature information 16 on the thermosensitive material specified by the material identification unit 19 is not stored in the storage device 15, it obtains the color density-temperature information 16 on the thermosensitive material specified by the material identification unit 19 from the external database 75, and stores the information 16 in the storage device 15. If the characteristic graph is also not stored in the external database 75, the temperature estimation unit 20 obtains sample data of color density corresponding to temperature, and allows the characteristic analysis unit 72 (see Fig. 1) to create a characteristic graph and an error range, and stores, in the storage device 15, the created characteristic graph and error range as the color density-temperature information 16 of the thermosensitive material.

When the temperature estimation unit 20 recognizes that the color density-temperature information 16 on the thermosensitive material specified by the material identification unit 19 is stored in the storage device 15, it estimates the highest temperature reached or the lowest temperature reached from the color density-temperature information 16 of the thermosensitive material stored in the storage device 15, the thermosensitive material identification information 17, and the color density of the image data 74.

Third Embodiment

Temperature Evaluation System

A third embodiment is described with a temperature evaluation system 10 that predicts remaining life of the article 35 (see Fig. 8), to which the indicator 30 (see Figs. 3 to 5) is attached, from the estimated highest temperature reached or lowest temperature reached, and reexamines a management condition of the article 35 from the remaining life .

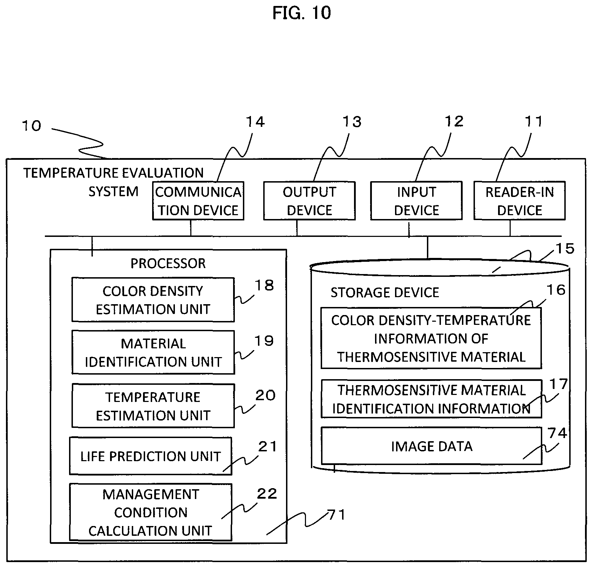

Fig. 10 shows a configuration of a temperature evaluation system 10 of a third embodiment. The temperature evaluation system 10 of the third embodiment includes the read-in device 11, the input device 12, the output device 13, the communication device 14, the storage device 15, and the processing device 71. The processing device 71 includes the color density estimation unit 18, the material identification unit 19, and the temperature estimation unit 20, and further includes a life prediction unit 21 that predicts remaining life of the article 35, to which the indicator 30 is attached, based on the highest temperature reached or the lowest temperature reached estimated by the temperature estimation unit 20, and a management condition calculation unit 22 that calculates a management condition of the article 35 based on the remaining life.

The temperature evaluation system 10 of the third embodiment estimates the highest temperature reached or the lowest temperature reached by the method described in the first or second embodiment.

The life prediction unit 21 predicts the remaining life of the article 35 from data on quality of the article 35, such as manufacturing date of the article 35, a management temperature range, and expiration date (a best-before date, a use-by date), and from the highest temperature reached or the lowest temperature reached. The predicted remaining life is stored in the storage device 15.

When the article 35 requiring temperature management is transported, a management temperature range is set. If temperature is deviated from the set temperature management range only for a short time, quality of the article 35 may not be significantly affected. From such a background, a method for predicting a remaining life using a product of the amount and time deviated from the management temperature range is used in a distribution field. In this case, a threshold is beforehand set, and quality of the article 35 is determined based on whether the product of the amount and the time deviated from the management temperature range exceeds the threshold. For example, when the threshold is set to 50 for the article 35 required to be managed at a temperature of -5°C or lower, remaining life L is obtained by a method that is described below using Formulas (1) and (2) .

$$\mathtt{Formula\ (1)}$$

$$L = h - K_{exc}T$$

$$\mathtt{Formula\ (2)}$$

$$K_{ex} = \begin{cases} K_{max} - K_{lim} & (K_{max} > K_{lim}) \\ 0 & (K_{max} \leqq K_{lim}) \end{cases}$$

In the formulas, h is threshold, $K_{ex}$ is deviation temperature from the management temperature range, $K_{max}$ is the highest temperature reached, $K_{lim}$ is the highest temperature in the management temperature range, and T is time for which temperature is deviated from the management temperature range. A larger numerical value of the remaining life L means a longer remaining life. In the third embodiment, a problem in quality is determined to occur in the case of the remaining life $L \leq 0$.

For example, when the article 35 is kept for 10 min at 0°C, since $K_{max} = 0$°C and $K_{lim} = -5$°C are given, $K_{ex} = 5$ is obtained. Since the threshold h = 50 is given, the remaining life L = 50 - 5 $\times$ 10 = 0 is obtained. The remaining life L = 0 reveals that the article 35 has a quality problem. When the article 35 is kept for 4 min at 0°C, the remaining life L = 50 - 5 $\times$ 4 = 30 is obtained. This reveals that although the commodity is deviated from the management temperature range for a certain time, since the deviation time is short, the commodity still has a remaining life. If the thermosensitive material does not change color, $K_{max} \leq K_{lim}$ is established and thus the life $K_{ex} = 0$ is given; hence, the remaining life L = the threshold h is obtained.

The threshold h corresponds to the permissible amount of the deviation amount from the management temperature range. When the article 35 to be transported is a food, the threshold is preferably set from a breeding condition of a bacillus, a quality deterioration condition, or the like.

The deviation time from the management temperature range can be obtained by further using a data logger mounted in a guided vehicle or a time indicator 30. If the deviation time from the management temperature range is unknown, elapsed time from manufacturing of the commodity or the like may be used instead.

The management condition calculation unit 22 calculates a management condition to maintain quality of the article 35 based on the remaining life L predicted by the life estimation unit, and records the management condition in the storage device 15.

The management temperature condition can be calculated using the following formula, for example.

Formula (3)

$$K_{rng} = \frac{L}{T_{rem}} - K_{mrg} + K_{lim}$$

In the formula, $K_{rng}$ is a management temperature condition, $T_{rem}$ is prediction time for transportation of the article 35, and $K_{mrg}$ is a temperature margin (permissible temperature range). The temperature margin is preferably set on the basis of a detection error caused by air conditioner performance, disturbance, or the like.

For example, when the threshold is set to 50 for the article 35 required to be managed at a temperature of -5°C or lower, and when the remaining life L is 30, expected time for transportation of the article 35 is 60 min, and the temperature margin is 2°C, $K_{rng}$ = 30 / 60 - 2 + (-5) = -6.5 is given. This reveals that the upper limit of the management temperature during transportation of the article is preferably reduced to -6.5 °C. The calculation method of the management condition is not limited to the above-described method.

The output device 13 outputs the calculated management condition. An operator can check the management condition output by the output device 13 to change a management condition during transportation of the article and resultantly suppress deterioration in quality of the article 35.

Article Management System

An article management system using the above-described temperature management system is described below. As shown in Fig. 8, the article management system 101 includes the temperature evaluation system 10, the management server (management device) 40, and the management terminals 61 to 68, where the temperature evaluation system 10, the management server 40, and the management terminals 61 are communicatively connected together via the network NW. The management terminals 61 to 68 are disposed at the respective carriage bases of the article 35. The management server 40 includes a processing unit 41, a storage unit 42, an input unit, an output unit, and a communication unit. The management terminals 61 to 68 each include a processing unit, a storage unit, an input unit, an output unit, and a communication unit.

In each base, an operator acquires the image data 74 of the thermosensitive material using the temperature evaluation system 10, and estimates the highest temperature reached or the lowest temperature reached. The operator further estimates the remaining life of the article 35, and reexamines the management condition of the article 35. Information such as the estimated highest temperature reached or lowest temperature reached, the remaining life of the article 35, and the reexamined management condition are transmitted to the management server 40, and recorded in the storage unit 42 of the management server 40. The management server 40 swaps the information with the temperature evaluation system 10 and the management terminals 61 to 68.

Consequently, a manager can acquire the highest temperature reached or the lowest temperature reached in a distribution process of the article 35 to be managed, the remaining life of the article 35, and the reexamined management condition. In addition, an operator in each base can connect to the management server 40 through one of the management terminals 61 to 68 to check the estimated highest temperature reached or lowest temperature reached, the remaining life of the article 35, and the reexamined management condition.

Fourth Embodiment

Although the third embodiment has been described with the article management system 101 in which the processing device 71 of the temperature evaluation system 10 includes the life prediction unit 21 and the management condition calculation unit 22, a fourth embodiment is described with an article management system 101 including the management server 40, the management terminals 60 to 68, and the read-in device 11.

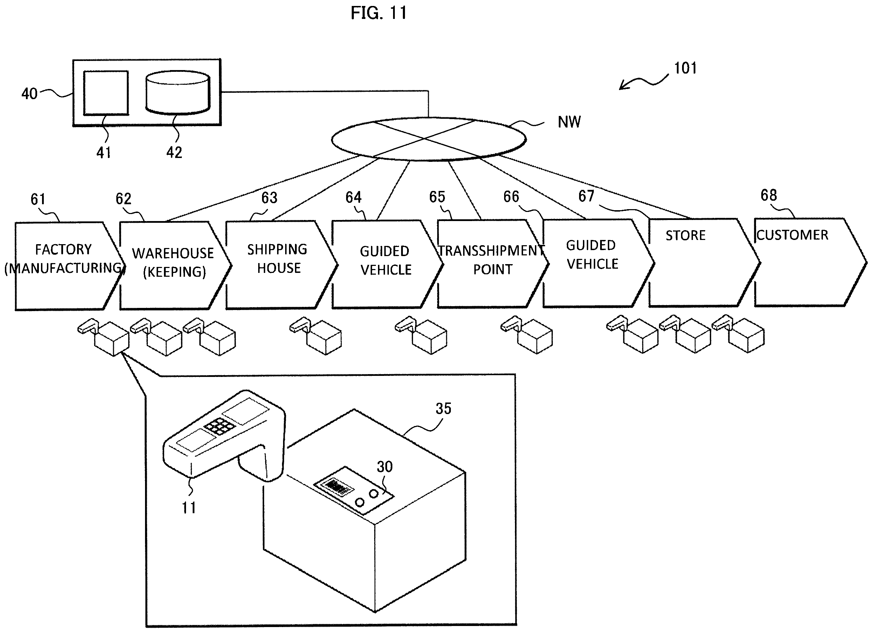

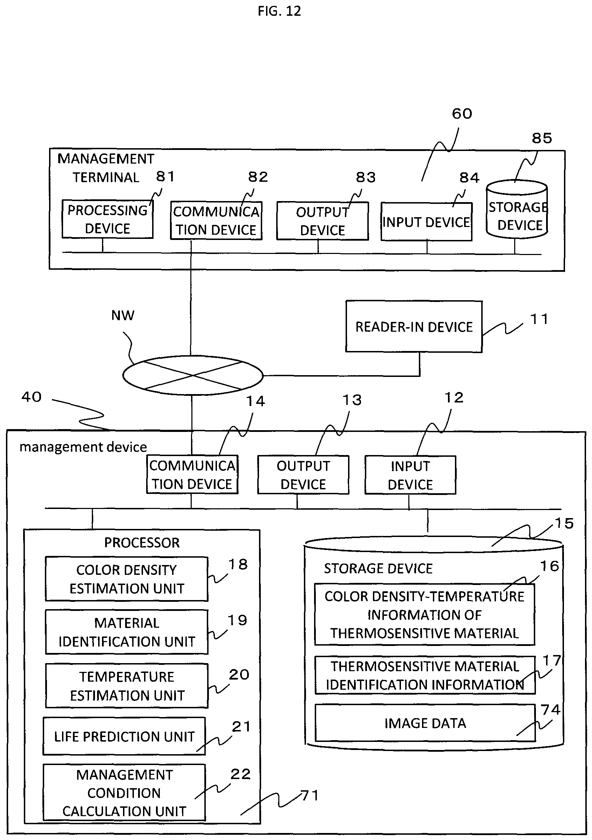

Figs. 11 and 12 each show a block diagram of the article management system 101. As shown in Figs. 11 and 12, the article management system 101 includes the read-in device 11 that acquires the image data 74 of the indicator 30 attached to the article 35 and using the thermosensitive material, the management server 40, and the management terminal 60 disposed in each carriage base of the article 35. The read-in device 11, the management server 40, and the management terminal 60 are connected together via the network NW.

The read-in device 11 acquires the image data 74 of the indicator 30 in each base.

As shown in Fig. 12, the management server 40 includes the input device 12, the output device 13, the communication device 14, the storage device 15 that stores relationships between color densities and temperatures for respective thermosensitive materials, and the processing device 71. The processing device 71 of the management server 40 includes a color density estimation unit 18 that estimates color density of the thermosensitive material from the image data 74, a material identification unit 19 that specifies the thermosensitive material used in the indicator 30, and a temperature estimation unit 20 that selects a relationship between a color density and a temperature of the thermosensitive material specified by the material identification unit 19 from among the relationships between the color densities and the temperatures of the respective thermosensitive materials, and estimates the highest temperature reached or the lowest temperature reached from the relationship between the color density and the density of the specified thermosensitive material and the color density estimated by the color density estimation unit 18. The processing device 71 of the management device 40 further includes the characteristic analysis unit 72 (see Fig. 1) that creates the color density-temperature information 16 of the thermosensitive material stored in the storage device 15, the code recognition unit 73 (see Fig. 1) that recognizes various codes, such as a one-dimensional code and a two-dimensional code, provided on the indicator 30, the life prediction unit 21 that predicts remaining life of the article 35, to which the indicator 30 is attached, based on the highest temperature reached or the lowest temperature reached estimated by the temperature estimation unit 20, and the management condition calculation unit 22 that calculates a management condition of the article 35 based on the remaining life.

The management terminal 60 includes a processing device 81, a communication device 82, an output device 83, an input device 84, and a storage device 85. The communication device 82 of the management terminal 60 receives from the management device 40 the information such as the highest temperature reached or the lowest temperature reached estimated or calculated by the management device 40, the remaining life of the article 35, and the management condition of the article 35, and outputs the information from the output device 83.

As described above, the temperature evaluation system 10 or the management device 40 includes the life prediction means and the management condition calculation means, thereby the highest temperature reached or the lowest temperature reached estimated by the temperature evaluation system 10 can be fed back to article management.

List of Reference Signs

10 Temperature evaluation system, 11 Read-in device, 12 Input device, 13 Output device, 14 Communication device, 15 Storage device, 16 Color density-temperature information of thermosensitive material, 17 Thermosensitive material identification information, 18 Color density estimation unit, 19 Material identification unit, 20 Temperature estimation unit, 21 Life prediction unit, 22 Management condition calculation unit, 30 Indicator, 31, 32, 33 Thermosensitive material, 34 One-dimensional code or two-dimensional code, 35 Article, 101 Article management system, 40 Management device, 41 Processing unit, 42 Storage unit, 60 to 68 Management terminal

**Claims**

1. A temperature evaluation system that evaluates temperature of an indicator using a thermosensitive material, the system comprising:

    a read-in device that acquires image data on the indicator;
    a storage device that stores relationships between color densities and temperatures for respective thermosensitive materials; and
    a processing device including a color density estimation unit that estimates the color density of the thermosensitive material from the image data, a material identification unit that specifies the thermosensitive material used in the indicator, and a temperature estimation unit that selects a relationship between a color density and a temperature of the thermosensitive material specified by the material identification unit from among the relationships between the color densities and the temperatures for the respective thermosensitive materials, and estimates highest temperature reached or lowest temperature reached from the relationship between the color density and the density of the specified thermosensitive material and the color density estimated by the color density estimation unit.

2. The temperature evaluation system according to claim 1,
    wherein the thermosensitive material changes color density at a certain gradient with an increase in temperature at a predetermined temperature or higher, or changes color density at a certain gradient with a decrease in temperature at a predetermined temperature or lower.

3. The temperature evaluation system according to claim 1 or 2,
    wherein the indicator has identification information of the thermosensitive material used in the indicator, and
    wherein the material identification unit acquires the identification information of the thermosensitive material used in the indicator from the image data acquired by the read-in device.

4. The temperature evaluation system according to any one of claims 1 to 3,
wherein the processing device includes a characteristic analysis unit to obtain a relationship between a color density and a temperature for each thermosensitive material.

5. The temperature evaluation system according to any one of claims 1 to 4, further comprising:

a communication unit that communicates with an external database,
wherein the temperature estimation unit acquires information of temperature and color density of the thermosensitive material used in the indicator via the communication unit, and estimates the highest temperature reached or the lowest temperature reached.

6. The temperature evaluation system according to any one of claims 1 to 3,
wherein the indicator is provided on an article, and
wherein the processing device further includes a life prediction unit that predicts remaining life of the article from the highest temperature reached or the lowest temperature reached estimated by the temperature estimation unit.

7. The temperature evaluation system according to claim 6,
wherein the processing device includes a management condition calculation unit that calculates a management condition of the article based on the remaining life predicted by the life prediction unit.

8. An article management system comprising: the temperature evaluation system according to any one of claims 1 to 5; a management terminal; and a management device,
wherein one of the temperature evaluation system and the management device includes: a life prediction unit that predicts remaining life of the article, the article having the indicator attached to the article, from the highest temperature reached or the lowest temperature reached estimated by the temperature estimation unit; and a management condition calculation unit that calculates a management condition of the article based on the remaining life predicted by the life prediction unit.

9. An article management system that manages quality of an article, the system comprising:

a read-in device that acquires image data on an indicator using a thermosensitive material;
a storage device that stores relationships between color densities and temperatures for respective thermosensitive materials;
a processing device including a color density estimation unit that estimates the color density of the thermosensitive material from the image data, a material identification unit that specifies the thermosensitive material used in the indicator, and a temperature estimation unit that selects a relationship between a color density and a temperature of the thermosensitive material specified by the material identification unit from among the relationships between the color densities and the temperatures for the respective thermosensitive materials, and estimates highest temperature reached or lowest temperature reached from the relationship between the color density and the density of the specified thermosensitive material and the color density estimated by the color density estimation unit;
a communication device that transmits and receives information to/from the read-in device and the storage device; and
a management terminal disposed in each carriage base of the article,
wherein the communication device transmits the highest temperature reached or the lowest temperature reached to a management device, and
wherein the management terminal includes a communication unit that receives the highest temperature reached or the lowest temperature reached from the processing device, and an output unit that outputs information received by the communication unit.

10. The article management system according to claim 9,
wherein the thermosensitive material changes color density at a certain gradient with an increase in temperature at a predetermined temperature or higher, or changes color density at a certain gradient with a decrease in temperature at a predetermined temperature or lower.

11. The article management system according to claim 9 or 10,

wherein the indicator has identification information of the thermosensitive material used in the indicator, and wherein the material identification unit acquires the identification information of the thermosensitive material used in the indicator from the image data acquired by the read-in device.

12. The article management system according to any one of claims 9 to 11, wherein the processing device includes a characteristic analysis unit that obtains a relationship between a color density and a temperature for each thermosensitive material.

13. The article management system according to any one of claims 9 to 12, wherein the temperature estimation unit acquires information of temperature and color density of the thermosensitive material used in the indicator from an external network, and estimates the highest temperature reached or the lowest temperature reached.

14. The article management system according to any one of claims 9 to 13, wherein the processing device further includes a life prediction unit that predicts time and temperature to arrival of the thermosensitive material used in the indicator at a predetermined temperature from the highest temperature reached or the lowest temperature reached estimated by the temperature estimation unit.

15. The article management system according to claim 14, wherein the processing device includes a management condition calculation unit that calculates a management condition to prevent the thermosensitive material from arriving at the predetermined temperature based on an estimation result of the life prediction unit.

16. The article management system according to claim 15, wherein the processing device transmits, to the management terminal, an estimation result of the life prediction unit or a calculation result of the management condition calculation unit, and wherein the output unit of the management terminal outputs one of an estimation result of the life prediction unit and a calculation result of the management condition calculation unit received from the processing device.

FIG. 1

FIG. 2

## FIG. 3

## FIG. 4

FIG. 5

| TEMPERATURE | RED | GREEN | BLUE |
|---|---|---|---|
| 20.1 | 90 | 75 | 55 |
| 5.0 | 32 | 67 | 88 |
| 15.8 | 88 | 87 | 32 |
| 2.2 | 51 | 95 | 95 |
| 0.3 | 17 | 71 | 15 |
| 5.9 | 77 | 35 | 37 |
| 4.5 | 41 | 86 | 2 |
| 11.2 | 99 | 18 | 21 |
| 23.6 | 24 | 29 | 116 |

FIG. 7

FIG. 8

101

NW

40
41
42

61 FACTORY (MANUFACTURING)
62 WAREHOUSE (KEEPING)
63 SHIPPING HOUSE
64 GUIDED VEHICLE
65 TRANSSHIPMENT POINT
66 GUIDED VEHICLE
67 STORE
68 CUSTOMER

35
30
10

FIG. 9

FIG. 10

FIG. 11

EP 3 614 112 A1

FIG. 12

## INTERNATIONAL SEARCH REPORT

| International application No. |
|---|
| PCT/JP2018/008837 |

| A. CLASSIFICATION OF SUBJECT MATTER |
|---|
| Int.Cl. G01K11/12(2006.01)i, G01K11/06(2006.01)i |
| According to International Patent Classification (IPC) or to both national classification and IPC |

| B. FIELDS SEARCHED |
|---|
| Minimum documentation searched (classification system followed by classification symbols) |
| Int.Cl. G01K11/00-18, G09F3/02, G06K7/00-14, G06K19/00-18, B65G61/00 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | WO 2016/208051 A1 (HITACHI, LTD.) 29 December 2016, paragraphs [0016]-[0060], fig. 1-5 (Family: none) | 1-16 |
| A | WO 2017/038848 A1 (GODO KAISHA IP BRIDGE 1) 09 March 2017, paragraphs [0010]-[0096], [0106]-[0114], fig. 1-12, 14 (Family: none) | 1-16 |
| A | JP 2008-156098 A (NIPPON TELEGRAPH AND TELEPHONE CORP.) 10 July 2008, paragraphs [0034]-[0073], fig. 1-2 (Family: none) | 1-16 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 May 2018 (21.05.2018) | 05 June 2018 (05.06.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2018/008837

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-181072 A (DAINIPPON PRINTING CO., LTD.) 07 July 2005, paragraphs [0010]-[0027], fig. 1-3 (Family: none) | 1-16 |
| A | JP 2000-131152 A (TOSHIBA TEC CORPORATION) 12 May 2000, paragraphs [0012]-[0042], fig. 1-6 (Family: none) | 1-16 |
| A | JP 2013-057662 A (FUJIFILM CORP.) 28 March 2013, paragraphs [0029]-[0129], fig. 1-6 & US 2014/0161684 A1, paragraphs [0029]-[0174], fig. 1-6 & WO 2013/024664 A1 & CN 103733038 A | 1-16 |
| A | WO 2008/074917 A1 (VALTION TEKNILLINEN TUTKIMUSKESKUS) 26 June 2008, page 7, line 9 to page 17, line 36, fig. 1-4 (Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001091368 A
- JP 2000131152 A